# EUROPÄISCHE PATENTSCHRIFT

(11) **EP 3 421 278 B1**
(45) Veröffentlichungstag und Bekanntmachung des Hinweises auf die Patenterteilung: **19.10.2022**
(21) Anmeldenummer: 17178782.3
(22) Anmeldetag: 29.06.2017
(51) Int. Cl.: B60J 10/75, B60J 10/30, B60J 10/36, B60J 10/265, B60R 13/04, B60Q 1/26, B60J 10/88, B60Q 1/32

(54) **BELEUCHTETE ZIERLEISTE**
ILLUMINATED DECORATIVE STRIP
ENJOLIVEUR ÉCLAIRÉ

(43) Veröffentlichungstag der Anmeldung: 02.01.2019
(73) Patentinhaber: PLASMAN Europe AB, 41263 Gothenburg (SE)
(72) Erfinder: Schulte, Martin, 58802 Balve (DE); Hundt, Torsten, 58809 Neuenrade (DE); Röhner, Dr., Stephan, 44287 Dortmund (DE)
(74) Vertreter: btb IP Bungartz Baltzer Partnerschaft mbB Patentanwälte

(56) Entgegenhaltungen:
- EP-A1- 2 363 324
- EP-A1- 3 100 910
- EP-A2- 2 062 784
- JP-A- 2009 083 565
- US-A1- 2015 246 637
- US-A1- 2016 121 799

## Beschreibung

Die Erfindung betrifft eine Zierleiste für ein Kraftfahrzeug, mit zumindest einer Beleuchtungseinheit mit wenigstens einem Leuchtmittel, wobei die Zierleiste bei bestimmungsgemäßer Montage am Fahrzeug eine vom Fahrzeug weg gerichtete Zierseite und eine zum Fahrzeug hingerichtete Innenseite aufweist, wobei die Zierleiste dazu bestimmt und eingerichtet ist, auf ein Kraftfahrzeug oder ein am Kraftfahrzeug angeordnetes Bauteil, insbesondere auf ein Dichtungsprofil, aufgesetzt und von diesem getragen zu werden, wobei bei aufgesetzter oder getragener Zierleiste (2) auf der der Zierseite (Z) abgewandten Seite der Zierleiste (2) ein Hohlraum ausgebildet ist, innerhalb dem die Beleuchtungseinheit (8) angeordnet ist, wobei Licht über einen Lichtspalt aus dem Hohlraum auszutreten vermag. Das emittierte Licht kann dabei insbesondere an der Innenseite der Zierleiste, an der Karossiere oder an Teilen des Dichtungsprofils reflektiert werden.

Beleuchtete Zierleisten für Fahrzeuge werden für die optische Aufwertung oder auch zu Sicherheitszwecken eingesetzt. Aus der DE 20 2014 002 763 U1 ist eine Abdeckungseinrichtung bekannt, die zur zumindest teilweisen Abdeckung einer Vertiefung eines ebenen Abschnitts, eines gewölbten Abschnitts und/oder eines abgestuften Abschnitts wenigstens eines Karosseriebauteils und/oder eines Fahrzeugelements eines Fahrzeugs dient. Diese Abdeckungseinrichtung weist eine Beleuchtungseinrichtung auf und ist derart ausgebildet, dass zumindest ein Abschnitt der Abdeckungseinrichtung mittels der Beleuchtungseinrichtung durchleuchtbar ist.

In der DE 10 2014 015 186 A1 wird ein Anbauteil zur Anordnung an einer Fahrzeugkomponente mit einer Trägeranordnung, zumindest einem an der Trägeranordnung angeordneten Leuchtelement und einem Abdeckelement, welches die Trägeranordnung und das Leuchtelement zumindest teilweise abdeckt, offenbart. Die Trägeranordnung, das Leuchtelement und das Abdeckelement sind derart ausgebildet und relativ zueinander angeordnet, dass sich im an der Fahrzeugkomponente montierten Zustand zwischen dem Abdeckelement und der Fahrzeugkomponente ein

Spalt ausbildet, wobei der Spalt derart ausgerichtet ist, dass mittels aus dem Leuchtelement ausgekoppelten Lichts eine Lichtverteilung auf der Fahrzeugkomponente und/oder in deren Umgebung erzeugbar ist.

Weiterhin beschreibt die DE 10 2015 100 327 A1 eine beleuchtete Zierleiste für ein Kraftfahrzeug, die einen edel anmutenden Beleuchtungseffekt erzielen soll und sich ferner äußerlich möglichst wenig von nicht beleuchteten Zierleisten unterscheidet, indem zwischen einer Profilleiste der Zierleiste und der angrenzenden Fahrzeugaußenhaut ein Lichtspalt ausgebildet ist, durch den von einem auf der Rückseite der Zierleiste vorgesehenen Lichtwellenleiter emittiertes Licht nach außen heraustreten kann. Eine ähnliche Zierleiste ist auch aus der DE 10 2015 015 748 A1 oder der EP 3 100 910 A1 bekannt.

Bei den zuvor beschriebenen beleuchteten Zierleisten besteht die Beleuchtungseinheit aus dem mindestens einen Leuchtmittel und Lichtleitern. Die dabei eingesetzten Lichtleiter können aufgrund limitierender Mindestbiegeradien zu einer inhomogenen und damit optisch nicht ansprechenden ambienten Beleuchtung der Zierleisten führen. Zudem besteht bei anderen Varianten zum Teil ein ungenügender Schutz der Elektronik (Leuchtmittel, elektrische Bauelemente/Schaltelemente, Leiterbahnen) vor Feuchtigkeit und Verschmutzung im Außenbereich des Fahrzeugs. Zudem ist keine individuelle Lichtsteuerung über die Länge möglich, wie sie bei den hinteren Richtungsanzeigern neuerer Fahrzeuge Verwendung findet.

Aufgabe der vorliegenden Erfindung ist es daher, eine Alternative zu den bekannten beleuchteten Zierleisten zu schaffen, bei der eine gleichmäßige ambiente Beleuchtung bei hoher Funktionssicherheit und geringem Fertigungsaufwand sowie Kosten erreicht wird. Zudem soll sich das äußere Erscheinungsbild der Zierleiste nicht wesentlich von dem nicht beleuchteter Zierleisten unterscheiden.

Erfindungsgemäß wird diese Aufgabe durch eine beleuchtete Zierleiste der eingangs erwähnten Art gelöst, bei der das zumindest eine Leuchtmittel der Beleuchtungseinheit auf einer von einer Folie gebildeten Trägerschicht angeordnet ist, die auf der Innenseite der Zierleiste befestigt ist, wobei das zumindest eine Leuchtmittel von einer transparenten und/oder transluzenten und/oder lichtleitenden Funktionsschicht um- oder überspritzt ist. Der Hohlraum, in dem die zumindest eine Beleuchtungseinheit angeordnet ist, kann von der Zierleiste und der Außenseite der Karosserie oder dem Dichtungsprofil begrenzt sein. Alternativ kann der Hohlraum auch innerhalb eines insbesondere unteren

Randes der Zierleiste oder sogar im Dichtungsprofil angeordnet sein. Die Zierleiste kann an einem Kraftfahrzeug durch Aufsetzen auf ein dort vorhandenes Dichtungsprofil montiert werden oder alternativ als separate Baueinheit das Dichtungsprofil tragend ausgebildet sein und zusammen mit dem Dichtungsprofil auf das Fahrzeug aufgesetzt werden.

Die Funktionsschicht bewirkt, neben einem Schutz der elektronischen Bauteile, insbesondere eine gezielte Verteilung oder eine Homogenisierung im Bereich des Leuchtmittels des aus dem mindestens einen Leuchtmittel emittierten Lichtes. Bevorzugt werden mehrere Leuchtmittel auf der Trägerschicht angeordnet, deren Abstand und Strahlungswinkel derart gestaltet sind, dass über die Länge der Zierleiste eine homogene Ausleuchtung entsteht. Weiterhin kann aber auch eine individuelle Lichtsteuerung über die Länge vorgesehen sein, um Hinweis-/Warnfunktionen und/oder einen optisch ansprechenden Effekt des Fahrzeugs realisieren zu können. Als Leuchtmittel werden erfindungsgemäß LEDs verwendet, die als oberflächenmontierte Bauelemente (SMD = Surface mounted Device) auf die Trägerschicht aufgebracht werden. Die LEDs können dabei mit und/oder ohne Gehäuse ausgeführt sein. Weitere Leuchtmittel wie OLEDs, OLETs oder aber beispielsweise Elektrolumineszenzfolien können ebenfalls als Leuchtmittel eingesetzt werden.

In einer bevorzugten Ausführungsform weist die Beleuchtungseinheit elektronische Bauelemente, insbesondere Steuerelektronik, und Leiterbahnen auf, die auf die Trägerschicht gedruckt sind. Alternativ können für das Aufbringen der elektronischen Bauelemente und Leiterbahnen auf die Trägerschicht aber auch andere Fertigungstechniken eingesetzt werden.

Das Aufbringen der Funktionsschicht erfolgt bevorzugt durch Um- bzw. Überspritzen im Spritzgussverfahren. Die Funktionsschicht ist bevorzugt aus Kunststoffen, wie beispielsweise PMMA oder PC gebildet. Durch das Überdecken der Leuchtmittel und elektronischen Bauelemente resultiert ein Schutz vor schädlichen Umgebungseinflüssen, was die Altersbeständigkeit und die Funktionssicherheit fördert. Weiterhin lassen sich auch die Enden der Beleuchtungseinheit transluzent oder transparent gestalten. Durch den Entfall von Lichtschatten an den Bauteilenden lässt sich die Ausleuchtung der erfindungsgemäßen Zierleiste verbessern. Insbesondere wird eine homogene ambiente Beleuchtung möglich. Zudem führt dies auch zu einem Entfall der Endkappen, die bei konventionellen Beleuchtungsmitteln konstruktionsbedingt vorgesehen sind, was zu einem geringeren Bauraumbedarf führt.

Eine bevorzugte Ausführungsform sieht vor, das Leuchtmittel direkt auf die Trägerschicht zu drucken. Möglich ist beispielsweise aber auch ein Bedampfen der Trägerschicht mit einem oder mehreren Leuchtmitteln.

Das Drucken der Leuchtmittel und/oder der elektronischen Bauelemente einschließlich der Leiterbahnen auf die Trägerschicht und deren anschließende Um-/Überspitzung ermöglicht eine Gestaltung der Beleuchtungseinheit mit geringer Bauhöhe, was designtechnisch vorteilhaft ist.

Der Einsatz neuartiger, gedruckter Elektronikkomponenten macht es möglich, konventionelle Beleuchtungsmethoden zu ersetzen. Die Bauteilmontage wird durch die Integration des Beleuchtungsmittels in die Zierleiste erheblich vereinfacht. Daneben lassen sich feinere Toleranzen realisieren. Die Enden der Leuchtmitteleinheit lassen sich zudem lichtdurchlässig gestalten. Durch das Umspritzen der Elektronikkomponenten wird ein besserer Schutz der Komponenten erreicht. Zudem sind bei der Montage der beleuchteten Zierleiste weniger Montageschritte erforderlich.

In einer anderen bevorzugten Ausführungsform ist die Beleuchtungseinheit durch eine laminierte Folie gebildet, auf die vor dem Laminieren die Leuchtmittel und/oder Elektronik gedruckt sind, wobei die Beleuchtungseinheit auf der Innenseite der Zierleiste angeordnet und, insbesondere durch Verkleben, befestigt ist.

Eine weitere bevorzugte Ausführung sieht vor, dass die Trägerschicht von zumindest einem Teil der Innenseite der Zierleiste gebildet ist. Somit werden die elektronischen Bauelemente und/oder die Leiterbahnen direkt auf die Innenseite der Zierleiste gedruckt. Die Leuchtmittel, also insbesondere die LEDs, werden bevorzugt ebenfalls auf die Innenseite der Zierleiste gedruckt und/oder oberflächenmontiert und dabei mit den Leiterbahnen und/oder elektronischen Bauelementen stoffschlüssig verbunden.

Bei einer weiteren möglichen Ausgestaltung bildet zumindest ein Teil des Dichtungsprofils auf der Innenseite der Zierleiste die Trägerschicht. Die zuvor beschriebenen Ausführungsformen der Bestückung/Bedruckung finden hier erfindungsgemäß ebenfalls Anwendung.

Um einen optisch besonders ästhetischen Eindruck zu vermitteln sind erfindungsgemäß in den transluzenten Bereichen der Funktionsschicht lichtstreuende Elemente vorgesehen, die das von dem Leuchtmittel emittierte Licht zumindest teilweise reflektieren und/oder brechen. Beispielsweise können die lichtstreuenden Elemente durch Farbpigmente gebildet sein.

Eine homogene und optisch ansprechende Ausleuchtung kann vorteilhaft auch dadurch erreicht werden, dass die Funktionsschicht mehrschichtig ausgeführt ist und/oder mindestens eine total reflektierende Grenzschicht aufweist. Die totalreflektierende Grenzschicht erstreckt sich bevorzugt über die Länge der Funktionsschicht.

Um ein besonders ansprechendes Lichtemissionsverhalten zu erreichen, ist es bevorzugt vorzusehen, die Außenseite der Funktionsschicht mit einer Struktur bzw. einem Muster und/oder einer Kontur zu versehen. Beispielsweise kann auf diese Art und Weise eine besonders gleichmäßige oder auch eine selektive Ausleuchtung der Zierleiste erreicht werden. Aber auch bestimmte Farben und/oder Konturmuster lassen sich auf diese Weise realisieren.

Eine weitere Ausgestaltung der Erfindung sieht vor, dass zwischen Trägerschicht und Funktionsschicht eine zusätzliche Schicht mit im Vergleich zur Funktionsschicht unterschiedlichen optischen Eigenschaften oder eine mit Gas oder Luft gefüllte Hohlkammer zur Verteilung des aus dem mindestens einen Leuchtmittel emittierten Lichtes vorgesehen ist.

Die Beleuchtungseinheit kann weitere elektronische Bauelemente, insbesondere Steuerelektronik/Spannungswandler aufweisen, die bevorzugt im Fahrzeuginnenraum und/oder auf der Innenseite der Zierleiste angeordnet sind, wobei Verbindungen zwischen den elektronischen Bauelementen und den Leuchtmitteln mittels Stromleiter vorgesehen sind. Die Integration im Fahrzeuginnenraum ist hinsichtlich des vorhandenen Bauraums und wegen der geringeren elektrischen Schutzartanforderung vorteilhaft. Bevorzugt können die elektronischen Bauelemente nachträglich montiert werden.

Die elektrische Verbindung der elektronischen Bauelemente mit den Leiterbahnen erfolgt bevorzugt über Stromleiter in Form von Leiterbahnen und/oder separaten Kabeln.

Einen weiteren Aspekt der Erfindung bildet ein Verfahren zum Herstellen der zuvor beschriebenen erfindungsgemäßen beleuchteten Zierleiste. Bei dem Verfahren wird ein Um- oder Überspritzen zumindest der auf der als Folie ausgebildeten und auf der Innenseite der Zierleiste befestigten Trägerschicht angeordneten Leuchtmittel mit einem transparenten und/oder transluzenten und/oder lichtleitenden Material derart bereitgestellt, dass die Leuchtmittel durch die Trägerschicht und die Funktionsschicht vollständig umkapselt werden. Bevorzugt erfolgt das Bedecken im Spritzgussverfahren.

Bevorzugt umfasst das erfindungsgemäße Verfahren den Schritt des Druckens der elektronischen Bauelemente und/oder der Leiterbahnen auf die Trägerschicht, bevor die Funktionsschicht aufgebracht wird.

Weiterhin sieht das Verfahren bevorzugt vor, dass die LEDs vor dem Aufbringen der Funktionsschicht durch Bestückung auf die Trägerschicht montiert werden. Alternativ und/oder ergänzend werden erfindungsgemäß die LEDs vor dem Bereitstellen der Funktionsschicht auf die Trägerschicht gedruckt.

Bei einer Ausführung der Trägerschicht als Folie umfasst das Verfahren erfindungsgemäß den Verfahrensschritt, die Folie auf der Innenseite der Zierleiste oder dem Dichtungsprofil zu befestigen. Dieser Schritt erfolgt nach dem Aufbringen der elektronischen Bauelemente und/oder Leiterbahnen und/oder des Leuchtmittels, aber vor dem Aufbringen der Funktionsschicht.

Auch bildet das Laminieren vor dem Aufbringen der Funktionsschicht einen Aspekt der Erfindung.

Die zuvor gemachten Merkmale und Ausführungsformen sind insbesondere für die in den Offenlegungsschriften DE 10 2015 100 327 A1 sowie DE 2 930 062 A1 dargelegten geometrischen Ausgestaltungen einer Zierleiste und deren Befestigung angedacht, deren Kombinationen ebenfalls mögliche Ausführungsformen der Erfindung bilden.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: eine Ausführungsform einer an einem Dichtungsprofil befestigten beleuchteten Zierleiste,
- Fig. 2: einen Ausschnitt der beleuchteten Zierleiste in einer zweiten Ausführungsform,
- Fig. 3: einen Ausschnitt der beleuchteten Zierleiste in einer dritten Ausführungsform,
- Fig. 4: einen Ausschnitt der beleuchten Zierleiste in einer nicht beanspruchten Ausführungsform und
- Fig. 5: eine Draufsicht der Beleuchtungseinheit in einer Ausführungsform.

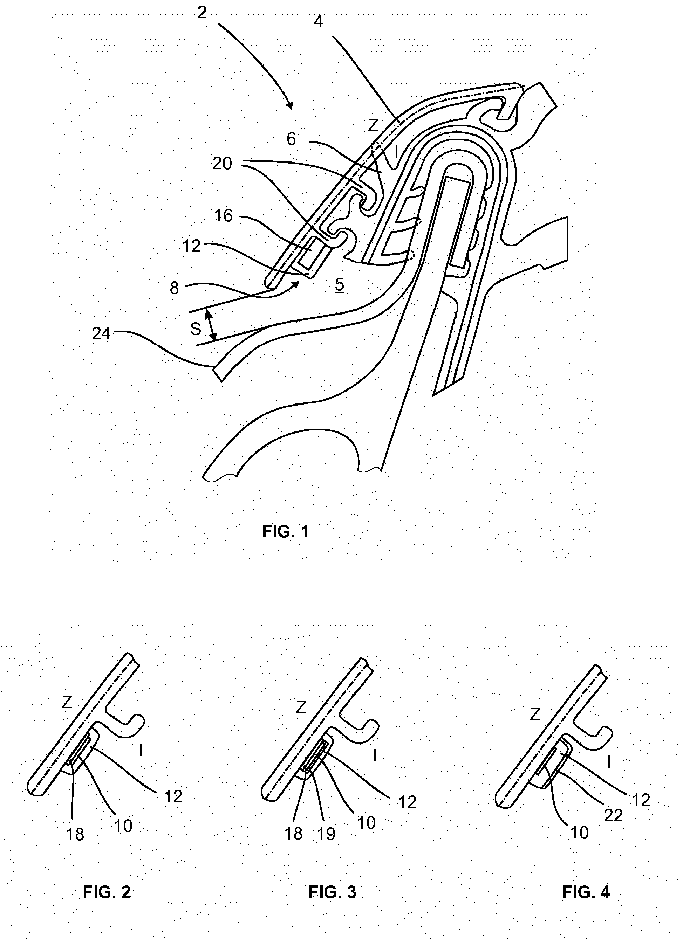

Die Figur 1 zeigt eine mögliche Ausführungsform einer als Abdeckleiste eines Dichtungsprofils 6 für den Fensterschacht einer Fahrzeugtür ausgebildeten beleuchteten Zierleiste 2. Das Dichtungsprofil 6 wird mit seinem U-förmigen, durch einen eingelegten Metallbügel verstärkten Abschnitt auf ein Karosserieteil eines Kraftfahrzeugs aufgesteckt und dichtet den Türschacht zur Fensterscheibe hin ab. Die Zierleiste 2 ist von einer Profilleiste 4 mit einem bogenförmigen Hauptschenkel und mehreren seitlichen Funktionsschenkeln 20 gebildet. Die Profilleiste 4 definiert bei bestimmungsgemäßer Montage eine vom Fahrzeug weg gerichtete Zierseite Z und eine zum Fahrzeug hin gerichtete Innenseite I. Die in der Figur eingezeichnete strichpunktierte Linie soll die Grenze zwischen der Zierseite Z und der Innenseite I veranschaulichen.

Die Funktionsschenkel 20 sind auf der Innenseite I der Profilleiste 4 angeordnet und befinden sich im Eingriff mit dem korrespondierend geformten Dichtungsprofil 6. Der Eingriff der Profilleiste 4 in das Dichtungsprofil 6 erfolgt derart, dass zwischen der unteren Sichtkante der Profilleiste 4 und der Karosserieaußenfläche bei bestimmungsgemäßer Montage der Zierleiste 2 ein Hohlraum 5 vorgesehen ist, aus dem Licht über einen Spalt S nach außen scheinen kann.

Im unteren Bereich der Zierleiste 2 ist auf der Innenseite I der Profilleiste 4 eine Beleuchtungseinheit 8 angeordnet. In der dargestellten Seitenansicht sind eine Elektronikkomponente 16 und eine die Elektronikkomponente 16 umgebene Funktionsschicht 12 von der Beleuchtungseinheit 8 zu erkennen. Das Leuchtmittel 10 (nicht dargestellt) und die Elektronikkomponente 16 sind auf dem unteren Funktionsschenkel 20 der Zierleiste 2 befestigt. Über das Leuchtmittel 10 (nicht dargestellt) und die Elektronikkomponente (elektrisches Bauelement) 16 ist die Funktionsschicht 12 derart aufgebracht, dass sowohl das Leuchtmittel 10 als auch die Elektronikkomponente 16 nach außen vollständig abgekapselt sind. Die Funktionsschicht 12 ist dabei zumindest teilweise transluzent und/oder transparent ausgebildet. Auf diese Weise vermag das durch die Beleuchtungseinheit 8 emittierte Licht aus dem Lichtspalt S unterhalb der Zierleiste austreten und so einen besonders ansprechenden optischen Effekt erreichen.

In den Figuren 2 bis 4 ist der Abschnitt der Profilleiste 4 aus Figur 1 mit jeweils unterschiedlichen Ausführungsformen der Beleuchtungseinheit 8 abgebildet. Die Anordnung der Beleuchtungseinheit 8 an der Profilleiste ist in den abgebildeten Figuren nicht geändert. Auch ist vorgesehen, die Beleuchtungseinheit 8 beispielsweise auf dem unteren Funktionsschenkel 20 oder auch auf dem Dichtungsprofil 6 anzuordnen.

Die Figur 2 zeigt eine Beleuchtungseinheit 8 mit einer als Folie 18 ausgebildeten Trägerschicht, auf der die Leuchtmittel 10 angeordnet sind. Die Folie 18 ist auf der Innenseite I der Profilleiste 4 befestigt und mit einem lichtleitenden Material überspritzt. Die in Figur 3 gezeigte Ausführungsform der Beleuchtungseinheit 8 weist im Vergleich zu der Ausführung in Figur 2 noch eine laminierte Schicht 19 auf. Die laminierte Schicht 19 befindet sich oberhalb der Leuchtmittel 10 und Teilen der Elektronik (nicht dargestellt). Die Funktionsschicht 12 überdeckt wiederum den Aufbau und verhindert das Eindringen von Feuchtigkeit und Schmutz.

In Figur 4 ist eine nicht beanspruchte Ausführungsform der Beleuchtungseinheit 8 abgebildet, bei der die Trägerschicht durch einen Teil der Profilleiste 4 gebildet ist. Die Leuchtmittel 10 und die Elektronik sind direkt beispielsweise durch Druck und/oder Oberflächenbestückung auf die Profilleiste 4 aufgebracht und mit einem eine Funktionsschicht 12 bildenden transluzenten oder lichtleitenden Material überspritzt. Die Funktionsschicht 12 weist dabei abschnittsweise einen mehrschichtigen Aufbau auf, dessen obere Schicht durch eine totalreflektierende Schicht 22 gebildet ist. Auf der dem Lichtspalt S zugewandten Seite der Funktionsschicht 12 ist keine reflektierende Schicht 22 vorgesehen. Auf diese Weise wird eine Ausrichtung des durch die Leuchtmittel 10 emittierten Lichts in Richtung Lichtspalt S erzielt.

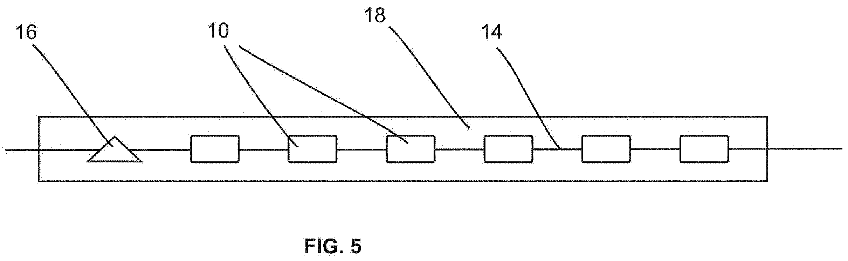

Die Figur 5 zeigt die Draufsicht einer Beleuchtungseinheit 8 für eine beleuchtete Zierleiste 2 in einer möglichen Ausführungsform. Dargestellt sind mehrere nebeneinander angeordnete Leuchtmittel 10, und eine Elektronikkomponente 16, die über Leiterbahnen 14 miteinander in Verbindung stehen. Eine streifenförmige Folie 18 bildet die Trägerschicht für die Leuchtmittel 10, die Leiterbahnen 14 und die Elektronikkomponente 16. Die Leuchtmittel 10 sind dabei oberflächenmontiert, können aber auch direkt auf die Folie 18 gedruckt werden. Der Abstand der Leuchtmittel 10 und deren Strahlungswinkel sind dabei derart ausgelegt, dass über die Länge der Folie 18 eine homogene Ausleuchtung entsteht.

Als Leuchtmittel 10 werden bevorzugt LEDs oder OLEDs eingesetzt. Ebenso stellt aber auch die direkte Verwendung von Elektrolumineszenzfolien eine Anwendungsmöglichkeit dar. Die Folie 18 wird auf der Innenseite I der Zierleiste 2 befestigt. Dies erfolgt bevorzugt durch Verkleben auf der Profilleiste 4 oder dem Dichtungsprofil 6. Anschließend wird der Aufbau mit einem lichtleitenden und/oder transparenten Material ein- oder mehrschichtig überspritzt. Die dadurch entstehende Funktionsschicht 12 bildet eine Verkapselung und schützt die Leuchtmittel 10 und die Elektronik vor schädlichen Einflüssen im Fahrzeugaußenbereich, insbesondere durch Schmutz, Feuchtigkeit und Luftsauerstoff. Auf diese Weise lässt sich die Farb- und Altersbeständigkeit und damit die Funktionsfähigkeit der Beleuchtungseinheit 8 steigern. Unterstützend kann die bestückte oder bedruckte Folie 18 noch vor dem Bekleben und Überspritzen laminiert werden.

### Bezugszeichenliste:

- 2: Beleuchtete Zierleiste
- 4: Profilleiste
- 5: Hohlraum
- 6: Dichtungsprofil
- 8: Beleuchtungseinheit
- 10: Leuchtmittel
- 12: Funktionsschicht
- 14: Leiterbahnen
- 16: Elektronikkomponente
- 18: Folie
- 19: Laminierte Schicht
- 20: Profilschenkel
- 22: Totalreflektierende Schicht
- 24: Fahrzeugaußenfläche
- S: Lichtspaltbreite
- Z: Zierseite
- I: Innenseite

## Patentansprüche

1. Beleuchtete Zierleiste (2) für ein Kraftfahrzeug, mit zumindest einer Beleuchtungseinheit (8) mit wenigstens einem Leuchtmittel (10), wobei die Zierleiste (2) bei bestimmungsgemäßer Montage am Fahrzeug eine vom Fahrzeug weg gerichtete Zierseite (Z) und eine zum Fahrzeug hingerichtete Innenseite (I) aufweist, wobei die Zierleiste (2) dazu bestimmt und eingerichtet ist, auf ein Kraftfahrzeug oder ein am Kraftfahrzeug angeordnetes Bauteil, insbesondere auf ein Dichtungsprofil (6), aufgesetzt und von diesem getragen zu werden, wobei bei aufgesetzter oder getragener Zierleiste (2) auf der der Zierseite (Z) abgewandten Seite der Zierleiste (2) ein Hohlraum (5) ausgebildet ist, innerhalb dem die Beleuchtungseinheit (8) angeordnet ist, wobei Licht über einen Lichtspalt (S) aus dem Hohlraum (5) auszutreten vermag, **dadurch gekennzeichnet, dass**
das zumindest eine Leuchtmittel (10) der Beleuchtungseinheit (8) auf einer von einer Folie (18) gebildeten Trägerschicht angeordnet ist, die auf der Innenseite (I) der Zierleiste befestigt ist, wobei das zumindest eine Leuchtmittel von einer transparenten und/oder transluzenten und/oder lichtleitenden Funktionsschicht (12) um- oder überspritzt ist.

2. Beleuchtete Zierleiste (2) nach Anspruch 1, **dadurch gekennzeichnet, dass** das mindestens eine Leuchtmittel (10) der Beleuchtungseinheit (8) durch oberflächenmontierte Bauelemente (SMDs) gebildet ist und/oder auf die Trägerschicht gedruckt ist.

3. Beleuchtete Zierleiste (2) nach einem der vorherigen Ansprüche, **dadurch gekennzeichnet, dass** die Beleuchtungseinheit (8) elektronische Bauelemente und/oder Leiterbahnen (14) aufweist, die auf die Trägerschicht gedruckt sind.

4. Beleuchtete Zierleiste (2) nach einem der Ansprüche 1 bis 3, **dadurch gekennzeichnet, dass** zumindest ein Teil der Innenseite (I) der Zierleiste (2) die Trägerschicht bildet.

5. Beleuchtete Zierleiste (2) nach einem der vorherigen Ansprüche, **dadurch gekennzeichnet, dass** die Funktionsschicht (12) derart ausgebildet ist, dass sie einen Schutz der elektronischen Bauteile sicherzustellen vermag und eine Verteilung des aus dem mindestens einen Leuchtmittel emittierten Lichtes, insbesondere zur Homogenisierung im Bereich des Umfeldes des Leuchtmittels durch Streueffekte, zu bewirken vermag, wobei die Verteilung durch die Oberflächenstruktur der Funktionsschicht (12) und/oder durch Partikel innerhalb der Funktionsschicht (12) realisiert ist.

6. Beleuchtete Zierleiste (2) nach einem der vorherigen Ansprüche, **dadurch gekennzeichnet, dass** zwischen Trägerschicht und Funktionsschicht (12) eine zusätzliche Schicht mit im Vergleich zur Funktionsschicht unterschiedlichen optischen Eigenschaften oder eine mit Gas oder Luft gefüllte Hohlkammer zur Verteilung des aus dem mindestens einen Leuchtmittel emittierten Lichtes vorgesehen ist.

7. Beleuchtete Zierleiste (2) nach einem der Ansprüche 5 oder 6, dass die Partikel in der Funktionsschicht (12) lichtstreuende Elemente bilden, die das von dem Leuchtmittel (10) emittierte Licht zumindest teilweise reflektieren und/oder brechen.

8. Beleuchtete Zierleiste (2) nach einem der vorherigen Ansprüche, **dadurch gekennzeichnet, dass** die Funktionsschicht (12) mehrschichtig ausgeführt ist und/oder mindestens eine total reflektierende Grenzschicht (22) aufweist.

9. Beleuchtete Zierleiste (2) nach einem der vorherigen Ansprüche, **dadurch gekennzeichnet, dass** die Beleuchtungseinheit (8) weitere elektronische Bauelemente aufweist, die im Fahrzeuginnenraum und/oder auf der Innenseite (I) der Zierleiste (2) angeordnet sind, wobei eine Verbindung zwischen den elektronischen Bauelementen und zumindest dem Leuchtmittel mittels Stromleiter vorgesehen ist.

10. Verfahren zum Herstellen einer beleuchteten Zierleiste (2) nach einem der vorherigen Ansprüche, bei dem die Funktionsschicht (12) durch Um- oder Überspritzen zumindest des auf der als Folie ausgebildeten und auf der Innenseite (I) der Zierleiste befestigten Trägerschicht angeordneten Leuchtmittels (10) mit einem transparenten und/oder transluzenten und/oder lichtleitenden Material derart bereitgestellt wird, dass das Leuchtmittel (10) durch die Trägerschicht und die Funktionsschicht (12) vollständig umkapselt wird.

11. Verfahren nach Anspruch 10, **dadurch gekennzeichnet, dass** vor dem Aufbringen der Funktionsschicht (12) die elektronischen Bauelemente und/oder die Leiterbahnen (14) auf die Trägerschicht gedruckt werden.

12. Verfahren nach Anspruch 10 oder 11, **dadurch gekennzeichnet, dass** das als Dioden ausgeführte Leuchtmittel (10) vor dem Aufbringen der Funktionsschicht (12) durch Bestückung auf die Trägerschicht montiert wird.

13. Verfahren nach Anspruch 10 oder 11, **dadurch gekennzeichnet, dass** das als Dioden ausgeführte Leuchtmittel (10) vor dem Bereitstellen der Funktionsschicht (12) auf die Trägerschicht gedruckt wird

14. Verfahren nach einem der Ansprüche 10 bis 13, **dadurch gekennzeichnet, dass** nach dem Drucken oder Bestücken und vor dem Aufbringen der Funktionsschicht (12) die als Folie ausgeführte Trägerschicht auf die Innenseite (I) der Zierleiste (2) oder auf dem Dichtungsprofil (6) befestigt wird.

## Claims

1. Illuminated trim (2) for a motor vehicle, having at least one lighting unit (8) with at least one lighting means (10), the trim (2), when mounted on the vehicle as intended, having a trim side (Z) directed away from the vehicle and an inner side (I) directed towards the vehicle, the trim (2) being designed and intended to be mounted on a motor vehicle or a component arranged on the motor vehicle, in particular on a sealing profile (6), and being supported by the latter, wherein, when the trim (2) is mounted or supported, a cavity (5) is formed on the side of the trim (2) directed away from the trim side (Z), the lighting unit (8) being arranged within the cavity (5), wherein light is able to emerge from the cavity (5) via a light gap (S), **characterized in that**
the at least one lighting means (10) of the lighting unit (8) is arranged on a carrier layer formed by a foil (18), which is fixed to the inner side (I) of the trim, the at least one lighting means being encapsulated or overmolded by a transparent and/or translucent and/or light-conducting functional layer (12).

2. Illuminated trim (2) according to claim 1, **characterized in that** the at least one lighting means (10) of the lighting unit (8) is formed by surface mounted devices (SMDs) and/or is printed on the carrier layer.

3. Illuminated trim (2) according to any one of the preceding claims, **characterized in that** the lighting unit (8) comprises electronic components and/or conductor tracks (14) printed on the carrier layer.

4. Illuminated trim (2) according to any one of claims 1 to 3, **characterized in that** at least part of the inner side (I) of the trim (2) forms the carrier layer.

5. Illuminated trim (2) according to one of the previous claims, **characterized in that** the functional layer (12) is designed in such a way that it is capable of ensuring protection of the electronic components and is capable of effecting a distribution of the light emitted from the at least one lighting means, in particular for homogenization in the region surrounding the lighting means by scattering effects, the distribution being realized by the surface structure of the functional layer (12) and/or by particles within the functional layer (12).

6. Illuminated trim (2) according to one of the previous claims, **characterized in that** an additional layer with different optical properties compared to the functional layer or a hollow chamber filled with gas or air is provided between the carrier layer and the functional layer (12) for distributing the light emitted from the at least one lighting means.

7. Illuminated trim (2) according to any one of claims 5 or 6, in that the particles in the functional layer (12) form light-scattering elements that at least partially reflect and/or refract the light emitted by the lighting means (10).

8. Illuminated trim (2) according to one of the previous claims, **characterized in that** the functional layer (12) is multilayered and/or has at least one totally reflective boundary layer (22).

9. Illuminated trim strip (2) according to one of the previous claims, **characterized in that** the lighting unit (8) has further electronic components which are arranged in the vehicle interior and/or on the inner side (I) of the trim (2), a connection being provided between the electronic components and at least the lighting means by means of current conductors.

10. Method for producing an illuminated trim (2) according to one of the preceding claims, wherein the functional layer (12) is provided by encapsulating or over-molding at least the lighting means (10), which is arranged on the carrier layer, which is formed as a film and fastened on the inner side (I) of the trim, with a transparent and/or translucent and/or light-conducting material in such a way that the lighting means (10) is completely encapsulated by the carrier layer and the functional layer (12).

11. The method according to claim 10, **characterized in that** the electronic components and/or the conductor tracks (14) are printed on the carrier layer before the application of the functional layer (12).

12. Method according to claim 10 or 11, **characterized in that** the lighting means (10) designed as diodes is mounted on the carrier layer by assembly before the functional layer (12) is applied.

13. Method according to claim 10 or 11, **characterized in that** the lighting means (10) designed as diodes is printed on the carrier layer before providing the functional layer (12)

14. Method according to any one of claims 10 to 13, **characterized in that**, after printing or assembling and before the functional layer (12) is applied, the carrier layer, which is in the form of a film, is fixed to the inner side (I) of the trim (2) or to the sealing profile (6).

## Revendications

1. Moulure décorative éclairée (2) pour un véhicule automobile, comprenant au moins une unité d'éclairage (8) avec au moins un moyen d'éclairage (10), la moulure décorative (2) présentant, lorsqu'elle est montée sur le véhicule conformément à sa destination, une face décorative (Z) orientée à l'opposé du véhicule et une face intérieure (I) orientée vers le véhicule, la moulure décorative (2) étant destinée et aménagée pour être posée sur un véhicule automobile ou sur un composant disposé sur le véhicule automobile, en particulier sur un profilé d'étanchéité (6), et d'être porté par celui-ci, une cavité (5) étant formée sur la face de la moulure décorative (2) opposé à la face décorative (Z) lorsque la moulure décorative (2) est posée ou portée, cavité à l'intérieur de laquelle est disposée l'unité d'éclairage (8), de la lumière pouvant sortir de la cavité (5) par une fente lumineuse (S), **caractérisé en ce que**
l'au moins un moyen d'éclairage (10) de l'unité d'éclairage (8) est disposé sur une couche de support formée par un film (18) qui est fixé sur la face intérieure (I) de la moulure décorative, l'au moins un moyen d'éclairage étant enrobé ou surmoulé par une couche fonctionnelle (12) transparente et/ou translucide et/ou conduisant la lumière.

2. Moulure décorative éclairée (2) selon la revendication 1, **caractérisée en ce que** l'au moins un moyen d'éclairage (10) de l'unité d'éclairage (8) est formé par des composants montés en surface (CMS) et/ou est imprimé sur la couche de support.

3. Moulure décorative éclairée (2) selon l'une des revendications précédentes, **caractérisée en ce que** l'unité d'éclairage (8) comporte des composants électroniques et/ou des pistes conductrices (14) imprimés sur la couche de support.

4. Moulure décorative éclairée (2) selon l'une des revendications 1 à 3, **caractérisée en ce qu'**au moins une partie de la face intérieure (I) de la moulure décorative (2) constitue la couche de support.

5. Moulure décorative éclairée (2) selon l'une des revendications précédentes, **caractérisée en ce que** la couche fonctionnelle (12) est conçue de telle sorte qu'elle est capable d'assurer une protection des composants électroniques et de provoquer une répartition de la lumière émise par l'au moins un moyen d'éclairage, en particulier pour l'homogénéisation dans la zone de l'environnement du moyen d'éclairage par des effets de diffusion, la répartition étant réalisée par la structure de surface de la couche fonctionnelle (12) et/ou par des particules à l'intérieur de la couche fonctionnelle (12).

6. Moulure décorative éclairée (2) selon l'une des revendications précédentes, **caractérisée en ce qu'**il est prévu, entre la couche de support et la couche fonctionnelle (12), une couche supplémentaire ayant des propriétés optiques différentes de celles de la couche fonctionnelle ou une chambre creuse remplie de gaz ou d'air pour répartir la lumière émise par l'au moins un moyen d'éclairage.

7. Moulure décorative éclairée (2) selon l'une des revendications 5 ou 6, en ce que les particules forment dans la couche fonctionnelle (12) des éléments diffusant la lumière, qui réfléchissent et/ou réfractent au moins partiellement la lumière émise par le moyen d'éclairage (10).

8. Moulure décorative éclairée (2) selon l'une des revendications précédentes, **caractérisée en ce que** la couche fonctionnelle (12) est réalisée en plusieurs couches et/ou présente au moins une couche limite (22) à réflexion totale.

9. Moulure décorative éclairée (2) selon l'une des revendications précédentes, **caractérisée en ce que** l'unité d'éclairage (8) présente d'autres composants électroniques qui sont disposés dans l'habitacle du véhicule et/ou sur la face intérieure (I) de la moulure décorative (2), une liaison entre les composants électroniques et au moins le moyen d'éclairage étant prévue au moyen de conducteurs électriques.

10. Procédé de fabrication d'une moulure décorative éclairée (2) selon l'une des revendications précédentes, dans lequel la couche fonctionnelle (12) est préparée par enrobage ou surmoulage au moins du moyen d'éclairage (10) disposé sur la couche de support réalisée sous forme de feuille et fixée sur la face intérieure (I) de la moulure décorative avec un matériau transparent et/ou translucide et/ou conducteur de lumière de telle sorte que le moyen d'éclairage (10) est complètement encapsulé par la couche de support et la couche fonctionnelle (12).

11. Procédé selon la revendication 10, **caractérisé en ce qu'**avant l'application de la couche fonctionnelle (12), les composants électroniques et/ou les pistes conductrices (14) sont imprimés sur la couche de support.

12. Procédé selon la revendication 10 ou 11, **caractérisé en ce que** le moyen d'éclairage (10) réalisé sous forme de diodes est monté sur la couche de support par garnissage avant l'application de la couche fonctionnelle (12).

13. Procédé selon la revendication 10 ou 11, **caractérisé en ce que** le moyen d'éclairage (10) réalisé sous forme de diodes est imprimé sur la couche de support avant la mise à disposition de la couche fonctionnelle (12)

14. Procédé selon l'une des revendications 10 à 13, **caractérisé en ce qu'**après l'impression ou le garnissage et avant l'application de la couche fonctionnelle (12), la couche de support réalisée sous forme de film est fixée sur la face intérieure (I) de la moulure décorative (2) ou sur le profilé d'étanchéité (6).
